# EUROPÄISCHE PATENTSCHRIFT

(11) **EP 2 907 551 B1**
(45) Veröffentlichungstag und Bekanntmachung des Hinweises auf die Patenterteilung: **21.10.2020**
(21) Anmeldenummer: 14155241.4
(22) Anmeldetag: 14.02.2014
(51) Int. Cl.: A63B 29/02, G01S 1/68, G01S 5/00

(54) **Suchgerät und Verfahren zum Betreiben eines Suchgeräts**
Detector and method for operating a detector
Détecteur et procédé de fonctionnement d'un détecteur

(43) Veröffentlichungstag der Anmeldung: 19.08.2015
(73) Patentinhaber: Ortovox Sportartikel GmbH, 82024 Taufkirchen (DE)
(72) Erfinder: Matzner, Rolf, 80639 München (DE)
(74) Vertreter: Hofstetter, Schurack & Partner

(56) Entgegenhaltungen:
- EP-A1- 1 785 169
- EP-A1- 1 785 170
- WO-A1-2006/015721
- CA-A1- 1 196 515
- CH-A1- 703 352
- CH-A1- 706 279
- DE-A1-102004 027 314
- FR-A1- 2 451 039

## Beschreibung

Die vorliegende Erfindung betrifft ein Suchgerät, insbesondere ein Lawinen-Verschütteten-Suchgerät (LVSG), mit mindestens einer ersten Sendeeinheit mit mindestens einer Sendeantenne, die ausgelegt ist, On-Off-modulierte Sendesignale zu senden, welche zumindest einen Sendepuls umfassen, der eine vorgebbare Sendefrequenz, eine vorgebbare Periodendauer sowie eine vorgebbare Einschaltdauer aufweist, mindestens einer Orientierungsbestimmungsvorrichtung, die ausgelegt ist, die Orientierung des Suchgeräts bezogen auf ein äußeres Bezugskoordinatensystem zu ermitteln und als Orientierungsdaten bereitzustellen, einer Verarbeitungsvorrichtung, die mit der Orientierungsbestimmungsvorrichtung gekoppelt und ausgelegt ist, die Orientierungsdaten zu verarbeiten, und einer zweiten Sendeeinheit.

Die Verarbeitungsvorrichtung ist mit der zweiten Sendeeinheit gekoppelt und ausgelegt, aus den von der Orientierungsbestimmungsvorrichtung bereitgestellten Orientierungsdaten Sendedaten abzuleiten, mittels denen Angaben zur Orientierung des Suchgeräts übertragbar sind. Die zweite Sendeeinheit ist ausgelegt, die von der Verarbeitungsvorrichtung bereitgestellten Sendedaten zu senden. Sie betrifft weiterhin ein Verfahren zum Betreiben eines Suchgeräts, insbesondere eines Lawinen-Verschütteten-Suchgeräts, mit mindestens einer ersten Sendeeinheit mit mindestens einer Sendeantenne, die ausgelegt ist, On-Off-modulierte Sendesignale zu senden, welche zumindest einen Sendepuls umfassen, der eine vorgebbare Sendefrequenz, eine vorgebbare Periodendauer sowie eine vorgebbare Einschaltdauer aufweist, und einer zweiten Sendeeinheit, wobei das Verfahren folgende Schritte umfasst: Zunächst wird die Orientierung des Suchgeräts bezogen auf ein äußeres Bezugskoordinatensystem ermittelt sowie anschließend die ermittelte Orientierung in Form von Orientierungsdaten bereitgestellt. Das Verfahren umfasst des Weiteren die Schritte: Ableiten von Sendedaten, mittels denen Angaben zur Orientierung des Suchgeräts übertragbar sind, aus den Orientierungsdaten; und Senden der Sendedaten durch eine zweite Sendeeinheit.

Die CH 703 352 A1 beschreibt ein Verfahren zum Auffinden eines Funksenders, welcher für die Ortung von Personen in Lawinen zum Einsatz kommen kann. Hierbei umfasst der von einer Lawine verschüttete Funksender drei orthogonale Antennen, welche über eine bidirektionale Funkverbindung mit an der Oberfläche angeordneten Funksendern in Verbindung stehen. Der sendende Funksender kann Beschleunigungssensoren und Magnetfeldsensoren aufweisen, deren Signale in einer Recheneinrichtung zum Bestimmen der Position des Funksenders verwendet werden können. Die Recheneinrichtung kann in dem verschütteten Funksender angeordnet sein. Zur Übermittlung der Informationen können die orthogonalen Antennen selber verwendet werden, indem ein Sendesignal moduliert wird. Alternativ können zusätzliche Sendeantennen vorgesehen sein, welche über einen anderen Funkkanal Sendesignale abgeben können. Mittels der Recheneinrichtung lässt sich eine Richtung, eine Entfernung und eine Orientierung des Funksenders relativ zu den an der Oberfläche angeordneten Funksendern bestimmen.

Die FR 2 451 039 A1 beschreibt eine Ortungseinrichtung zum Orten eines Skifahrers oder Bergsteigers, bei welcher eine Sendeeinheit auf einer Karte untergebracht ist, wie sie etwa als Liftkarte in Skigebieten zum Einsatz kommt. Ein von der Sendeeinheit ausgegebenes hochfrequentes Signal wird mittels eines Niederfrequenzgenerators in Abhängigkeit von einer Orientierung der Karte bezogen auf eine vertikale Richtung moduliert.

Ein weiteres Suchgerät beziehungsweise ein weiteres Verfahren ist bekannt aus der EP 2 072 092.

LVSGs nach dem Stand der Technik sind in der Lage sich gegenseitig zu orten. Dabei kann - bis auf wenige Zentimeter genau - die senkrechte Projektion der Lage des verschütteten, sendenden LVSGs auf die Schneeoberfläche durch das suchende LVSG bestimmt werden. An dieser Stelle wird dann zur Bergung des Verschütteten gegraben. Trotz dieser fortgeschrittenen Technologie besteht nach wie vor der Wunsch nach einer weiteren Optimierung der Rettung. Dabei ist zu berücksichtigen, dass die Überlebenschancen eines Verschütteten mit zunehmender Verschüttungsdauer rapide sinken.

Die Aufgabe der vorliegenden Erfindung besteht deshalb darin, ein eingangs genanntes Suchgerät beziehungsweise ein eingangs genanntes Verfahren derart weiterzubilden, dass die Überlebenschancen Verschütteter verbessert werden.

Diese Aufgabe wird gelöst durch ein Suchgerät mit den Merkmalen von Patentanspruch 1 sowie durch ein Verfahren mit den Merkmalen von Patentanspruch 13.

Das Suchgerät weist gemäß einem Aspekt der Erfindung eine Eingabevorrichtung auf, die ausgelegt ist, die Position des Suchgeräts relativ zum Kopf eines Benutzers zu spezifizieren, wobei das Suchgerät ausgelegt ist, diesen Parameter; mittels der zweiten Sendeeinheit zu übertragen. Damit ist es für einen Benutzer auf einfachste Weise möglich, die individuelle Trageweise seines Suchgeräts dem Suchgerät mitzuteilen, damit diese dann in den an den Suchenden übertragenen Informationen bei der Ermittlung der Kopflage des Verschütteten berücksichtigt werden kann. Bei einer ersten Variante (nur eine Sendeeinheit) ist zu diesem Zweck in dem Speicher der Verarbeitungsvorrichtung als Eingangsgröße nicht nur die vertikale und die horizontale Orientierung vorgesehen, sondern auch die Montageart des Suchgeräts. Als Ausgangsgröße werden wiederum Periodendauer, Einschaltdauer und Sendefrequenz geliefert, in denen die Eingangsgrößen kodiert enthalten sind. Bei einer zweiten Variante (zwei Sendeeinheiten) werden demnach über einen zweiten Funkkanal sowohl die horizontale Orientierung und die vertikale Orientierung des verschütteten LVSGs als auch die Montageart des Suchgeräts an das suchende LVSG übermittelt.

Gemäß einem weiteren Aspekt der Erfindung umfasst das erfindungsgemäße Suchgerät weiterhin eine Empfangseinheit mit mindestens einer Empfangsantenne zum Empfangen eines Sendesignals sowie eine Anzeigevorrichtung, die mit der Verarbeitungsvorrichtung gekoppelt ist, wobei die Verarbeitungsvorrichtung ausgelegt ist, das Sendesignal derart auszuwerten, dass auf der Anzeigevorrichtung als Suchort die Position des Kopfs des Verschütteten angezeigt wird. Die mindestens eine Empfangsantenne kann dabei mit der mindestens einen Sendeantenne identisch sein. Auf diese Weise ist auch in einer von Stress geprägten Bergungssituation der Grabungsort für den Suchenden auf zuverlässige Weise erkennbar. Die Verarbeitungsvorrichtung kehrt bei der Auswertung des empfangenen Sendesignals letztlich die beim Senden vorgenommene Kodierung der Kopflage in dem mindestens einen Übertragungsparameter durch entsprechende Dekodierung um. Bei der ersten Variante ist demnach nur eine Empfangseinheit vorzusehen, während bei der zweiten Variante eine zweite, auf die zweite Sendeeinheit abgestimmte Empfangseinheit vorzusehen ist. Auf diese Weise wirken bevorzugt zwei erfindungsgemäße Suchgeräte in einem System zusammen: Bei der zweiten Variante kann das vom verschütteten LVSG gesendete zweite Sendesignal nur von einem entsprechend weitergebildeten suchenden LVSG empfangen und ausgewertet werden. Bei der ersten Variante sendet ein erfindungsgemäßes verschüttetes LVSG Orientierungsdaten, während ein erfindungsgemäßes suchendes LVSG die in den Übertragungsparameter(n) kodierte Information auswertet und als Suchort die Position des Kopfs des Verschütteten anzeigt. Deshalb ist es bevorzugt, wenn alle Mitglieder einer Gruppe mit erfindungsgemäßen Suchgeräten, egal ob von der ersten oder der zweiten Variante, ausgerüstet sind. Ist bei der zweiten Variante nur das verschüttete LVSG erfindungsgemäß weitergebildet, erfolgt die Suche nach dem Stand der Technik. Ist bei der zweiten Variante lediglich das suchende LVSG erfindungsgemäß weitergebildet, wird zwar eine Kodierung der Kopflage in den verwendeten Übertragungsparametern durch das suchende LVSG angenommen, woraus sich im Mittel allerdings weder ein Vorteil noch ein Nachteil ergibt. Teilt man nämlich die Wirkung der durch die dann fälschlicherweise erfolgende Interpretation des mindestens einen Übertragungsparameters grob in zwei Fälle: näher zum Kopf und weiter weg vom Kopf, ein, so erkennt man, dass man sich in der Hälfte der Fälle dem Kopf nähern und in der anderen Hälfte der Fälle vom Kopf entfernen wird.

Die vorliegende Erfindung beruht auf der Erkenntnis, dass die größte Bedrohung für Lawinenverschüttete der Tod durch Ersticken darstellt. Für die Rettung bedeutet dies, dem Verschütteten so schnell wie möglich die Atmung zu ermöglichen. Deshalb ist das Schaufeln sinnvollerweise so anzulegen, dass als Erstes die Atmungsorgane, das heißt der Kopfbereich, freigelegt werden.

Selbst wenn, wie erwähnt, im Stand der Technik die senkrechte Projektion der Lage des sendenden LVSGs auf die Schneeoberfläche bestimmt werden kann, kann dadurch noch nicht auf die Lage des Kopfs des Verschütteten geschlossen werden: Erstens ist nicht bekannt, wie das sendende LVSG räumlich zum Kopf liegt, das heißt wie genau der Verschüttete sein LVSG am Körper trägt. Zweitens trägt das ausgesendete magnetische Feld keine Richtungsinformation. Selbst wenn die relative Lage des sendenden LVSGs zum Kopf des Verschütteten genau bekannt wäre, ließe sich die Orientierung des sendenden LVSGs nur mit einer Mehrdeutigkeit von 180° bestimmen.

Die erfindungsgemäße Lösung basiert weiterhin auf der Erkenntnis, dass das sendende Lawinen-Verschütteten-Suchgerät hinreichend starr und definierbar zum Kopf des Verschütteten angeordnet werden kann. Dies lässt sich beispielsweise durch eine starre Integration in einem festsitzenden Lawinenrucksack erreichen. Das sendende LVSG ermittelt seine Orientierung bezüglich eines äußeren Bezugskoordinatensystems und überträgt diese an das suchende LVSG. Dabei können die vertikale und die horizontale Orientierung in bekannter Weise mit Beschleunigungssensoren und einem mindestens zweiachsigen Sensor für das Erdmagnetfeld ermittelt werden. Beide Orientierungen werden an das suchende LVSG gesendet. Dieses kombiniert die so empfangene Orientierung des LVSGs des Verschütteten, die auf gleiche Weise ermittelte eigene Orientierung und die Kenntnis über die exakte Trageweise, um eine Schätzung der Lage des Kopfs des Verschütteten auf einer Anzeigevorrichtung anzuzeigen. Dabei kann das suchende LVSG die Kenntnis über die exakte Trageweise durch Vereinbarung erlangen. D.h. alle LVSGs einer bestimmten Baureihe müssen vereinbarungsgemäß in einer vorgeschriebenen Position getragen werden. Alternativ kann das suchende LVSG die Kenntnis über die exakte Trageweise dadurch erlangen, dass diese vom verschütteten LVSG übertragen wird. Durch die Kombination der Trageweise und der Orientierung des verschütteten LVSG im suchenden LVSG kann der Suchende zielgerichtet zuerst den Kopfbereich des Verschütteten freilegen.

Durch diese Maßnahme wird wertvolle Zeit gewonnen bis dem Verschütteten wieder die Atmung ermöglicht wird. Dadurch steigen die Überlebenschancen Verschütteter signifikant an. Wie für den Fachmann offensichtlich, bedeutet es bei der Rettung einen erheblichen Zeitverlust, wenn beispielsweise in zwei Meter Tiefe zunächst das an der Hüfte montierte Lawinen-Verschütteten-Suchgerät freigelegt wird. Bis zur Freilegung der Atmungsorgane vergehen dann mindestens zwei bis drei weitere Minuten, die über Tod und Leben entscheiden können.

Die Orientierungsbestimmungsvorrichtung ist bevorzugt ausgelegt, die vertikale und die horizontale Orientierung des Suchgeräts bezogen auf das äußere Bezugskoordinatensystem zu ermitteln. Auf diese Weise lässt sich besonders präzise die Kopflage des Verschütteten ermitteln. In diesem Zusammenhang weist die Orientierungsbestimmungsvorrichtung bevorzugt einen ersten Beschleunigungssensor zum Ermitteln eines Kippwinkels, einen zweiten Beschleunigungssensor zum Ermitteln eines Rollwinkels des Suchgeräts sowie einen mindestens zweiachsigen Erdmagnetfeldsensor auf. Mit dem Erdmagnetfeldsensor wird demnach als Bezugskoordinatensystem das Erdmagnetfeld ausgewertet, wobei der erste und der zweite Beschleunigungssensor die Orientierung des Suchgeräts in diesem Bezugskoordinatensystem definieren.

Bei der ersten Variante ist die zweite Sendeeinheit identisch mit der ersten Sendeeinheit. Das heißt es ist lediglich eine Sendeeinheit vorgesehen, was in einer besonders leichten, kostengünstigen und kleinen Ausführungsform eines erfindungsgemäßen Suchgeräts resultiert. Dabei ist die Verarbeitungsvorrichtung bevorzugt ausgelegt, in Abhängigkeit der ermittelten Orientierungsdaten die vorgebbare Periodendauer und/oder die vorgebbare Einschaltdauer und/oder die vorgebbare Sendefrequenz des Sendesignals festzulegen. Diese Realisierung basiert auf der Erkenntnis, dass der Wertebereich für die vorgebbare Periodendauer nach der Norm ETSI EN 300 718-1 im Intervall von 700 ms bis 1300 ms liegt, der Wertebereich für die vorgebbare Einschaltdauer im Intervall von 700 ms bis 650 ms und der Wertebereich für die vorgebbare Sendefrequenz im Intervall von 456,920 kHz bis 457,080 kHz. Während im Stand der Technik die Werte für die Periodendauer, die Einschaltdauer und die Sendefrequenz innerhalb der vorgebbaren Wertebereiche zufällig oder beliebig gewählt werden, werden sie bei der vorliegenden Variante eines erfindungsgemäßen Suchgeräts mit Vorbedacht ausgewählt, um damit die horizontale und die vertikale Orientierung des Suchgeräts in kodierter Form zu übermitteln. In diesem Zusammenhang weist die Verarbeitungsvorrichtung bevorzugt einen Speicher, insbesondere eine Look-up-Tabelle auf, in der vorgegebenen Werten der ermittelten Orientierungsdaten, insbesondere der horizontalen und der vertikalen Orientierung, vorgegebenen Werten für die Periodendauer und/oder die Einschaltdauer und/oder die Sendefrequenz zugeordnet sind. Dabei ist die Verarbeitungsvorrichtung bevorzugt ausgelegt, in Abhängigkeit der ermittelten Orientierungsdaten die vorgebbare Periodendauer und/oder die vorgebbare Einschaltdauer und/oder die vorgebbare Sendefrequenz des Sendesignals festzulegen.

Es kann demnach vorgesehen sein, lediglich einen der drei Übertragungsparameter (Periodendauer, Einschaltdauer, Sendefrequenz) zielgerichtet zu modifizieren oder mehrere davon.

Bevorzugt ist die Verarbeitungsvorrichtung weiterhin ausgelegt, die für das Sendesignal zu verwendende vorgebbare Periodendauer und/oder die vorgebbare Einschaltdauer und/oder die vorgebbare Sendefrequenz jedenfalls dann neu festzulegen, wenn eine Verschüttung festgestellt wurde. Das heißt, kurz vor dem nächsten anstehenden Sendeimpuls des LVSG wird die Orientierung des LVSG ermittelt, daraufhin die vorgebbare Periodendauer und/oder die vorgebbare Einschaltdauer und/oder die vorgebbare Sendefrequenz festgelegt und diese dann für das Sendesignal verwendet, um dem Suchenden auf der Basis der aktuell ermittelten Lage des Suchgeräts Informationen zur Position des Kopfs des Verschütteten zu übermitteln.

In diesem Zusammenhang ist es bevorzugt, wenn die Orientierungsbestimmungsvorrichtung ausgelegt ist, im Betrieb des Suchgeräts die Orientierung des Suchgeräts fortlaufend zu bestimmen, wobei eine Verschüttung dadurch festgestellt wird, dass sich die fortlaufend bestimmte Orientierung über eine vorgebbare Zeitdauer nicht geändert hat. Durch diesen Automatismus wird ohne Zutun des Verschütteten jedenfalls nach einer Verschüttung, damit begonnen, Informationen über die Orientierung des Suchgeräts zur Ermittlung der Lage das Kopfbereichs des Verschütteten an das suchende LVSGs zu senden.

Gemäß der zweiten Variante kann die zweite Sendeeinheit eine zur ersten Sendeeinheit zusätzliche Sendeeinheit darstellen, wobei die Verarbeitungsvorrichtung ausgelegt ist auf der Basis der bereitgestellten Sendedaten ein von der zweiten Sendeeinheit zu sendendes Sendesignal zu erzeugen. Der Vorteil dieser Realisierung besteht darin, dass durch die unabhängig arbeitende zweite Sendeeinheit zusätzliche Redundanz erzielt wird.

Diese zweite Sendeeinheit ist bevorzugt ausgelegt, einen anderen Funkkanal zu nutzen als die erste Sendeeinheit. Dabei können Frequenzbänder verwendet werden, welche für den lizenzfreien Betrieb von so genannten Short Range Devices (SRD) freigegeben sind, insbesondere Frequenzen unter 1 GHz. Dabei sind die geeigneten SRD-Frequenzbänder beispielsweise 433 MHz, 868 MHz sowie 902 bis 928 MHz. Die zu erwartende Reichweite liegt im Bereich 20 m bis 100 m.

Des Weiteren ist die Eingabevorrichtung bevorzugt ausgelegt, zumindest zwei der folgenden Auswahlmöglichkeiten für die Montageart des Suchgeräts anzubieten: Montage des Suchgeräts im Rucksack, Montage des Suchgeräts an der Hüfte auf der Bauchseite, Montage des Suchgeräts an der Hüfte auf der linken/rechten Seite, Montage des Suchgeräts im Helm. Die Verarbeitungsvorrichtung ist dabei mit der Eingabevorrichtung gekoppelt und ausgelegt, die Montageart bei der Ableitung der Sendedaten zu berücksichtigen, sodass neben den Orientierungsdaten auch die Montageart gesendet wird. Ohne diese Spezifikation könnte über die Bedienungsanleitung eines erfindungsgemäßen Suchgeräts eine obligatorische Trageart des Suchgeräts vorgeschrieben werden. Dadurch würde die Notwendigkeit einer Eingabevorrichtung zur Spezifikation der Position des Suchgeräts relativ zum Kopf des Benutzers sowie Vorkehrungen zur Übertragung dieses Parameters entfallen.

Weitere bevorzugte Ausführungsformen ergeben sich aus den Unteransprüchen.

Die mit Bezug auf das erfindungsgemäße Suchgerät vorgestellten bevorzugten Ausführungsformen und deren Vorteile gelten entsprechend, soweit anwendbar, für ein erfindungsgemäßes Verfahren.

Im Nachfolgenden werden nunmehr Ausführungsformen der vorliegenden Erfindung unter Bezugnahme auf die beigefügten Zeichnungen näher beschrieben. Es zeigen:
- Fig. 1: in schematischer Darstellung ein Ausführungsbeispiel eines erfindungsgemäßen Suchgeräts; und
- Fig. 2: in schematischer Darstellung ein Ablaufdiagramm eines Ausführungsbeispiels eines erfindungsgemäßen Verfahrens.

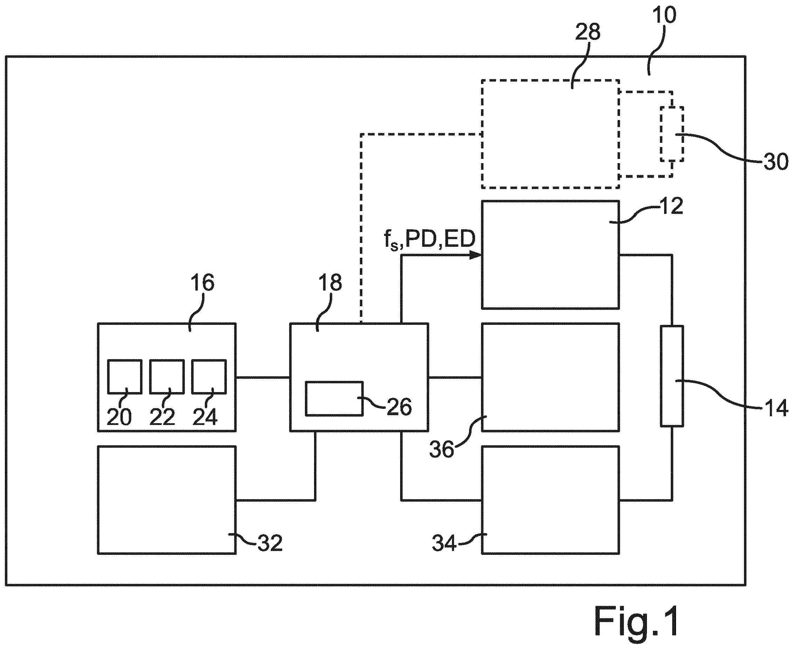

Fig. 1 zeigt in schematischer Darstellung ein Ausführungsbeispiel eines erfindungsgemäßen Suchgeräts 10. Dieses umfasst eine Sendeeinheit 12 mit einer Sendeantenne 14 zum Senden On-Off-modulierter Sendesignale, welche zumindest einen Sendepuls umfassen, der eine vorgebbare Sendefrequenz fₛ, eine vorgebbare Periodendauer PD sowie eine vorgebbare Einschaltdauer ED aufweist. Unter On-Off-modulierten Signalen sind Signale zu verstehen, bei denen ein sinusförmiger Träger periodisch ein- und ausgeschaltet wird. Dabei ist fₛ die Frequenz der Sinusschwingung, PD die Zeit zwischen zwei Einschaltvorgängen und ED die Zeit zwischen einem Ein- und dem darauffolgenden Ausschaltvorgang.

Eine Orientierungsbestimmungsvorrichtung 16 ist ausgelegt, die Orientierung des Suchgeräts 10 bezogen auf ein äußeres Bezugskoordinatensystem, insbesondere das Erdmagnetfeld, zu ermitteln und als Orientierungsdaten an eine Verarbeitungsvorrichtung 18 bereitzustellen, die ausgelegt ist, die Orientierungsdaten zu verarbeiten. Die Verarbeitungsvorrichtung 18 ist mit der Sendeeinheit 12 gekoppelt. Sie ist ausgelegt, aus den von der Orientierungsbestimmungsvorrichtung 16 bereitgestellten Orientierungsdaten Sendedaten abzuleiten, mittels denen Angaben zur Orientierung des Suchgeräts 10 übertragbar sind, wobei die Sendeeinheit 12 ausgelegt ist, die von der Verarbeitungsvorrichtung 18 bereitgestellten Sendedaten zu senden.

Die Orientierungsbestimmungsvorrichtung 16 ist ausgelegt, die vertikale und die horizontale Orientierung des Suchgeräts 10 bezogen auf das äußere Bezugskoordinatensystem zu ermitteln. Zu diesem Zweck umfasst die Orientierungsbestimmungsvorrichtung 16 bevorzugt einen ersten Beschleunigungssensor 20 zum Ermitteln eines Kippwinkels des Suchgeräts 10, einen zweiten Beschleunigungssensor 22 zum Ermitteln eines Rollwinkels des Suchgeräts 10 sowie einen mindestens zweiachsigen, bevorzugt einen dreiachsigen Erdmagnetfeldsensor 24. In diesem Ausführungsbeispiel stellt das Erdmagnetfeld das äußere Bezugskoordinatensystem dar.

Bei dem vorgestellten Ausführungsbeispiel ist die Verarbeitungsvorrichtung 18 ausgelegt, in Abhängigkeit der ermittelten Orientierungsdaten die vorgebbare Periodendauer PD und/oder die vorgebbare Einschaltdauer ED und/oder die vorgebbare Sendefrequenz fₛ des Sendesignals festzulegen. Zu diesem Zweck umfasst die Verarbeitungsvorrichtung 18 einen Speicher 26, insbesondere eine Look-up-Tabelle, in der vorgegebenen Werten der ermittelten Orientierungsdaten, insbesondere der horizontalen und der vertikalen Orientierung, vorgegebene Werte für die Periodendauer PD und/oder die Einschaltdauer ED und/oder die Sendefrequenz fₛ zugeordnet sind. Auf diese Weise können die Orientierungsdaten kodiert durch die Wahl vereinbarter Werte für zumindest einen der Übertragungsparameter an ein Empfangsgerät übertragen werden. Der Wertebereich für die vorgebbare Periodendauer PD liegt im Intervall von 700 ms bis 1300 ms, der für die vorgebbare Einschaltdauer ED im Intervall von 70 ms bis 650 ms und der für die vorgebbare Sendefrequenz fₛ im Intervall von 456,920 kHz bis 457,080 kHz.

Die Orientierungsbestimmungsvorrichtung 16 ist weiterhin ausgelegt, im Betrieb des Suchgeräts die Orientierung des Suchgeräts 10 fortlaufend zu bestimmen, wobei eine Verschüttung dadurch festgestellt wird, dass sich die fortlaufend bestimmte Orientierung über eine vorgebbare Zeitdauer nicht geändert hat. Nach Feststellen einer Verschüttung legt die Verarbeitungsvorrichtung 18 die für das Sendesignal zu verwendende vorgebbare Periodendauer PD und/oder die vorgebbare Einschaltdauer ED und/oder die vorgebbare Sendefrequenz fₛ neu fest. Ein mit dem sendenden Suchgerät 10 zusammenwirkendes suchendes Suchgerät kann ausgelegt sein, den Wechsel des mindestens einen Übertragungsparameters zu detektieren und bei Detektion eines derartigen Wechsel davon auszugehen, dass in den nun vom sendenden Suchgerät 10 verwendeten Übertragungsparametern Angaben zur Orientierung des Suchgeräts 10 kodiert sind. Dies kann beispielsweise dann sinnvoll sein, wenn ein erfindungsgemäßes Suchgerät 10 ausgebildet ist, während einer Tour die Übertragungsparameter der Suchgeräte der anderen Teilnehmer der Tour zu lernen und in einer Liste abzulegen. Wenn dann eine Suchsituation entsteht, kann ein erfindungsgemäßes Suchgerät 10 den Wechsel des mindestens einen Übertragungsparameters eines verschütteten Suchgeräts erkennen, da in der gelernten Liste dem betreffenden Suchgerät mindestens ein anderer Übertragungsparameter zugewiesen ist.

In dem bisher beschriebenen Ausführungsbeispiel wird davon ausgegangen, dass, beispielsweise durch eine Anweisung in einer Bedienungsanleitung, das verschüttete Suchgerät 10 vom Benutzer in einer vorgeschriebenen Position getragen wird. Diese Kenntnis wird beim suchenden LVSG ausgenutzt, um die Kopflage des Verschütteten zu ermitteln. Eine Alternative, die einem Benutzer die Auswahlmöglichkeit unter verschiedenen Montagearten des Suchgeräts 10 ermöglicht, wird weiter unten detaillierter beschrieben.

In dem bisher beschriebenen Ausführungsbeispiel ist lediglich eine Sendeeinheit 12 vorgesehen. Bei einem zweiten Ausführungsbeispiel ist weiterhin eine in Fig. 1 gestrichelt eingezeichnete zweite Sendeeinheit 28 mit einer Sendeantenne 30 vorgesehen, wobei die Verarbeitungsvorrichtung 18 ausgelegt ist, auf der Basis der bereitgestellten Sendedaten ein von der zweiten Sendeeinheit 28 zu sendendes Signal zu erzeugen. Dabei ist die zweite Sendeeinheit 28 ausgelegt, einen anderen Funkkanal zu nutzen als die erste Sendeeinheit 12. Demnach sendet die erste Sendeeinheit 12 Informationen zur Lage des verschütteten Suchgeräts 10, während die zweite Sendeeinheit 28 Informationen für eine genauere Spezifikation der Lage des Kopfs des Verschütteten sendet, d.h. erfindungsgemäß jedenfalls Informationen zur Orientierung des Suchgeräts.

Das Suchgerät 10 kann bei beiden Varianten eine Eingabevorrichtung 32 umfassen, die ausgelegt ist, die Position des Suchgeräts 10 relativ zum Kopf eines Benutzers zu spezifizieren. Dabei kann vorgesehen sein, dass die Eingabevorrichtung 32 zumindest zwei der folgenden Auswahlmöglichkeiten für die Montageart des Suchgeräts 10 anbietet: Montage des Suchgeräts 10 im Rucksack, Montage des Suchgeräts 10 an der Hüfte auf der Bauchseite, Montage des Suchgeräts 10 an der Hüfte auf der linken/rechten Seite sowie Montage des Suchgeräts 10 im Helm. Die Verarbeitungsvorrichtung 18 ist mit der Eingabevorrichtung 32 gekoppelt und ausgelegt, die Montageart bei der Ableitung der Sendedaten zu berücksichtigen, sodass neben den Orientierungsdaten auch die Montageart gesendet wird. In diesem Fall werden empfangsseitig die Orientierungsdaten und die Montageart verknüpft, um die Lage des Kopfs des Verschütteten zu ermitteln. Alternativ kann bereits sendeseitig vorgesehen werden, die Orientierungsdaten mit der Montageart zu verknüpfen und lediglich das Ergebnis an ein suchendes Suchgerät zu übertragen. Bei der ersten Variante eines erfindungsgemäßen Suchgeräts 10 werden demnach für die Übertragungsparameter (Periodendauer, Einschaltdauer, Sendefrequenz) dann Werte gewählt, die im Speicher den ermittelten Werten für die horizontale Orientierung, die vertikale Orientierung und die Montageart zugeordnet sind. Bei der zweiten Variante eines erfindungsgemäßen Suchgeräts 10 kann die Montageart zusätzlich zu den ermittelten Werten für die horizontale und die vertikale Orientierung des Suchgeräts 10 von der zweiten Sendeeinheit übertragen werden. In einer weiteren Ausführung kann die Verarbeitungseinheit 18 aus den Lagedaten der Orientierungsbestimmungsvorrichtung 16 und der Montageart aus der Eingabevorrichtung 32 transformierte Lagedaten berechnen, welche abhängig von der konkreten Montageart stets die Ausrichtung des Kopfes zum externen Bezugskoordinatensystem angeben.

Das Suchgerät 10 umfasst weiterhin mindestens eine erste Empfangseinheit 34, wobei die erste Empfangseinheit 34 die Sendeantenne 14 als Empfangsantenne nutzt. Weiterhin ist eine Anzeigevorrichtung 36 vorgesehen, die mit der Verarbeitungsvorrichtung 26 gekoppelt ist. Dabei ist die Verarbeitungsvorrichtung 26 ausgelegt, das Sendesignal derart auszuwerten, dass auf der Anzeigevorrichtung 36 als Suchort die Position des Kopfs des Verschütteten angezeigt wird. Bei der zweiten Variante, die eine zweite Sendeeinheit 28 umfasst, ist entsprechend eine zweite, auf die zweite Sendeeinheit 28 abgestimmte Empfangseinheit (nicht dargestellt) vorgesehen., die dann mit der Verarbeitungsvorrichtung 26 gekoppelt ist. Die zweite Empfangseinheit benutzt bevorzugt die Sendeantenne 30 als Empfangsantenne.

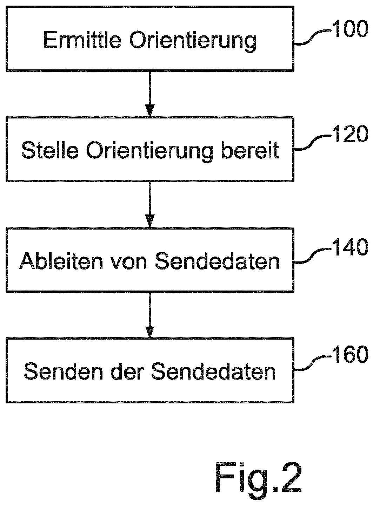

Fig. 2 zeigt in schematischer Darstellung ein Ablaufdiagramm eines Ausführungsbeispiels eines erfindungsgemäßen Verfahrens. Dabei wird in einem Schritt 100 die Orientierung des Suchgeräts 10 bezogen auf ein äußeres Bezugskoordinatensystem, insbesondere das Erdmagnetfeld, ermittelt. In einem Schritt 120 wird die ermittelte Orientierung in Form von Orientierungsdaten bereitgestellt. Anschließend werden in einem Schritt 140 Sendedaten, mit denen Angaben zur Orientierung des Suchgeräts 10 übertragbar sind, aus den Orientierungsdaten abgeleitet. Schließlich werden in einem Schritt 160 die Sendedaten durch eine zweite Sendeeinheit gesendet. Dabei kann die zweite Sendeeinheit der ersten Sendeeinheit 12 entsprechen, kann jedoch auch eine zusätzliche Sendeeinheit 28 darstellen.

## Patentansprüche

1. Suchgerät (10), insbesondere Lawinen-Verschütteten-Suchgerät, mit
- mindestens einer ersten Sendeeinheit (12) mit mindestens einer Sendeantenne (14), die ausgelegt ist, On-Off-modulierte Sendesignale zu senden, welche zumindest einen Sendepuls umfassen, der eine vorgebbare Sendefrequenz (fₛ), eine vorgebbare Periodendauer (PD) sowie eine vorgebbare Einschaltdauer (ED) aufweist;
- mindestens einer Orientierungsbestimmungsvorrichtung (16), die ausgelegt ist, die Orientierung des Suchgeräts (10) bezogen auf ein äußeres Bezugskoordinatensystem zu ermitteln und als Orientierungsdaten bereitzustellen;
- einer Verarbeitungsvorrichtung (18), die mit der Orientierungsbestimmungsvorrichtung (16) gekoppelt und ausgelegt ist, die Orientierungsdaten zu verarbeiten; und
- einer zweiten Sendeeinheit (12; 28);
wobei die Verarbeitungsvorrichtung (18) mit der zweiten Sendeeinheit (12; 28) gekoppelt ist;
wobei die Verarbeitungsvorrichtung (18) ausgelegt ist, aus den von der Orientierungsbestimmungsvorrichtung (16) bereitgestellten Orientierungsdaten Sendedaten abzuleiten, mittels denen Angaben zur Orientierung des Suchgeräts (10) übertragbar sind;
wobei die zweite Sendeeinheit (12; 28) ausgelegt ist, die von der Verarbeitungsvorrichtung (18) bereitgestellten Sendedaten zu senden,
**dadurch gekennzeichnet,**
**dass** das Suchgerät (10) eine Eingabevorrichtung (32) aufweist, die ausgelegt ist, die Position des Suchgeräts (10) relativ zum Kopf eines Benutzers zu spezifizieren, wobei das Suchgerät (10) ausgelegt ist, diesen Parameter mittels der zweiten Sendeeinheit (12; 28) zu übertragen, und/oder dadurch,
**dass** das Suchgerät (10) weiterhin umfasst:
- mindestens eine Empfangseinheit (34) mit mindestens einer Empfangsantenne zum Empfangen eines Sendesignals, welches eine Kodierung der Kopflage eines Verschütteten beinhaltet; sowie
- eine Anzeigevorrichtung (36), die mit der Verarbeitungsvorrichtung (18) gekoppelt ist;
wobei die Verarbeitungsvorrichtung (18) ausgelegt ist, das Sendesignal derart auszuwerten, dass auf der Anzeigevorrichtung (36) als Suchort die Position des Kopfs des Verschütteten angezeigt wird.

2. Suchgerät (10) nach Anspruch 1,
**dadurch gekennzeichnet**
**dass** die Orientierungsbestimmungsvorrichtung (16) ausgelegt ist, die vertikale und die horizontale Orientierung des Suchgeräts (10) bezogen auf das äußere Bezugskoordinatensystem zu ermitteln.

3. Suchgerät (10) nach Anspruch 2,
**dadurch gekennzeichnet**
**dass** die Orientierungsbestimmungsvorrichtung (16) einen ersten Beschleunigungssensor (20) zum Ermitteln eines Kippwinkels, einen zweiten Beschleunigungssensor (20) zum Ermitteln eines Rollwinkels des Suchgeräts (10) sowie einen mindestens zweiachsigen Erdmagnetfeldsensor umfasst.

4. Suchgerät (10) nach einem der vorhergehenden Ansprüche,
**dadurch gekennzeichnet,**
**dass** die zweite Sendeeinheit (12) identisch ist mit der ersten Sendeeinheit (12).

5. Suchgerät (10) nach Anspruch 4,
**dadurch gekennzeichnet**
**dass** die Verarbeitungsvorrichtung (18) ausgelegt ist, in Abhängigkeit der ermittelten Orientierungsdaten die vorgebbare Periodendauer (PD) und/oder die vorgebbare Einschaltdauer (ED) und/oder die vorgebbare Sendefrequenz (fₛ) des Sendesignals festzulegen.

6. Suchgerät (10) nach Anspruch 5,
**dadurch gekennzeichnet**
**dass** die Verarbeitungsvorrichtung (18) einen Speicher (26), insbesondere eine Look-up-Tabelle, umfasst, in der vorgegebenen Werten der ermittelten Orientierungsdaten, insbesondere der horizontalen und der vertikalen Orientierung, vorgegebene Werte für die Periodendauer (PD) und/oder die Einschaltdauer (ED) und/oder die Sendefrequenz (fₛ) zugeordnet sind.

7. Suchgerät (10) nach Anspruch 6,
**dadurch gekennzeichnet**
**dass** der Wertebereich für die vorgebbare Periodendauer (PD) im Intervall von 700 ms bis 1300 ms liegt und/oder der Wertebereich für die vorgebbare Einschaltdauer (ED) im Intervall von 70 ms bis 650 ms liegt und/oder der Wertebereich für die vorgebbare Sendefrequenz (fₛ) im Intervall von 456,920 kHz bis 457,080 kHz liegt.

8. Suchgerät (10) nach einem der Ansprüche 5 bis 7,
**dadurch gekennzeichnet**
**dass** die Verarbeitungsvorrichtung (18) ausgelegt ist, die für das Sendesignal zu verwendende vorgebbare Periodendauer (PD) und/oder die vorgebbare Einschaltdauer (ED) und/oder die vorgebbare Sendefrequenz (fₛ) jedenfalls dann neu festzulegen, wenn eine Verschüttung festgestellt wurde.

9. Suchgerät (10) nach Anspruch 8,
**dadurch gekennzeichnet,**
**dass** die Orientierungsbestimmungsvorrichtung (16) ausgelegt ist, im Betrieb des Suchgeräts (10) die Orientierung des Suchgeräts (10) fortlaufend zu bestimmen, wobei eine Verschüttung dadurch festgestellt wird, dass sich die fortlaufend bestimmte Orientierung über eine vorgebbare Zeitdauer nicht geändert hat.

10. Suchgerät (10) nach einem der Ansprüche 1 bis 3,
**dadurch gekennzeichnet,**
**dass** die zweite Sendeeinheit (28) eine zur ersten Sendeeinheit (12) zusätzliche Sendeeinheit darstellt, wobei die Verarbeitungsvorrichtung (18) ausgelegt ist auf der Basis der bereitgestellten Sendedaten ein von der zweiten Sendeeinheit (28) zu sendendes Sendesignal zu erzeugen.

11. Suchgerät (10) nach Anspruch 10,
**dadurch gekennzeichnet,**
**dass** die zweite Sendeeinheit (28) ausgelegt ist, einen anderen Funkkanal zu nutzen als die erste Sendeeinheit (12).

12. Suchgerät (10) nach einem der vorhergehenden Ansprüche,
**dadurch gekennzeichnet,**
**dass** die Eingabevorrichtung (32) ausgelegt ist, zumindest zwei der folgenden Auswahlmöglichkeiten für die Montageart des Suchgeräts (10) anzubieten:
- Montage des Suchgeräts (10) im Rucksack;
- Montage des Suchgeräts (10) an der Hüfte auf der Bauchseite;
- Montage des Suchgeräts (10) an der Hüfte auf der linken/rechten Seite;
- Montage des Suchgeräts (10) im Helm,
wobei die Verarbeitungsvorrichtung (18) mit der Eingabevorrichtung (32) gekoppelt und ausgelegt ist, die Montageart bei der Ableitung der Sendedaten zu berücksichtigen, so dass neben den Orientierungsdaten auch die Montageart gesendet wird.

13. Verfahren zum Betreiben eines Suchgeräts (10), insbesondere Lawinen-Verschütteten-Suchgerät, mit mindestens einer ersten Sendeeinheit (12) mit mindestens einer Sendeantenne (14, 30), die ausgelegt ist, On-Off-modulierte Sendesignale zu senden, welche zumindest einen Sendepuls umfassen, der eine vorgebbare Sendefrequenz (fₛ), eine vorgebbare Periodendauer (PD) sowie eine vorgebbare Einschaltdauer (ED) aufweist, und einer zweiten Sendeeinheit (12; 28), folgende Schritte (100, 120) umfassend:
a) Ermitteln (Schritt 100) der Orientierung des Suchgeräts (10) bezogen auf ein äußeres Bezugskoordinatensystem; sowie
b) Bereitstellen (Schritt 120) der ermittelten Orientierung in Form von Orientierungsdaten;
c) Ableiten (Schritt 140) von Sendedaten, mittels denen Angaben zur Orientierung des Suchgeräts (10) übertragbar sind, aus den Orientierungsdaten; und
d) Senden (Schritt 160) der Sendedaten durch die zweite Sendeeinheit (12; 28);
**gekennzeichnet durch** die folgenden weiteren Schritte:
- Betätigen einer Eingabevorrichtung (32), um die Position des Suchgeräts (10) relativ zum Kopf eines Benutzers zu spezifizieren, und Übertragen dieses Parameters mittels der zweiten Sendeeinheit (12; 28); und/oder
- Empfangen eines Sendesignals, welches eine Kodierung der Kopflage eines Verschütteten beinhaltet, mittels mindestens einer Empfangseinheit (34) des Suchgeräts (10) mit mindestens einer Empfangsantenne; und
- Auswerten des Sendesignals mittels einer Verarbeitungsvorrichtung (18) des Suchgeräts (10) derart, dass auf einer Anzeigevorrichtung (36) des Suchgeräts (10), die mit der Verarbeitungsvorrichtung (18) gekoppelt ist, als Suchort die Position des Kopfs des Verschütteten angezeigt wird.

## Claims

1. A detector (10), in particular avalanche transceiver, comprising
- at least one first transmitting unit (12) with at least one transmitting antenna (14), which is configured to transmit on-off modulated transmission signals, which include at least one transmission pulse, which has a presettable transmission frequency (fₛ), a presettable period duration (PD) as well as a presettable on-duration (ED);
- at least one orientation determination device (16), which is configured to ascertain the orientation of the detector (10) related to an external reference coordinate system and to provide it as orientation data;
- a processing device (18), which is coupled to the orientation determination device (16) and configured to process the orientation data; and
- a second transmitting unit (12; 28);
wherein the processing device (18) is coupled to the second transmitting unit (12; 28);
wherein the processing device (18) is configured to derive transmission data from the orientation data provided by the orientation determination device (16), by means of which information on the orientation of the detector (10) can be transferred;
wherein the second transmitting unit (12; 28) is configured to transmit the transmission data provided by the processing device (18),
**characterized in that**
the detector (10) comprises an input device (32), which is configured to specify the position of the detector (10) in relation to the head of a user, wherein the detector (10) is configured to transfer this parameter by means of the second transmitting unit (12; 28), and/or **in that**
the detector (10) further includes:
- at least one receiving unit (34) with at least one receiving antenna for receiving a transmission signal, which involves a coding of the head position of a victim buried alive; as well as
- a display device (36), which is coupled to the processing device (18),
wherein the processing device (18) is configured to evaluate the transmission signal such that the position of the head of the victim buried alive is displayed on the display device (36) as the search location.

2. The detector (10) according to claim 1,
**characterized in that**
the orientation determination device (16) is configured to ascertain the vertical and the horizontal orientation of the detector (10) related to the external reference coordinate system.

3. The detector (10) according to claim 2,
**characterized in that**
the orientation determination device (16) includes a first acceleration sensor (20) for ascertaining a tilt angle, a second acceleration sensor (20) for ascertaining a roll angle of the detector (10) as well as an at least biaxial earth's magnetic field sensor.

4. The detector (10) according to any one of the preceding claims,
**characterized in that**
the second transmitting unit (12) is identical to the first transmitting unit (12).

5. The detector (10) according to claim 4,
**characterized in that**
the processing device (18) is configured to set the presettable period duration (PD) and/or the presettable on-duration (ED) and/or the presettable transmission frequency (fₛ) of the transmission signal depending on the ascertained orientation data.

6. The detector (10) according to claim 5,
**characterized in that**
the processing device (18) includes a storage (26), in particular a look-up table, in which preset values for the period duration (PD) and/or the on-duration (ED) and/or the transmission frequency (fₛ) are associated with preset values of the ascertained orientation data, in particular of the horizontal and the vertical orientation.

7. The detector (10) according to claim 6,
**characterized in that**
the range of values for the presettable period duration (PD) is in the interval from 700 ms to 1300 ms and/or the range of values for the presettable on-duration (ED) is in the interval from 70 ms to 650 ms and/or the range of values for the presettable transmission frequency (fₛ) is in the interval from 456.920 kHz to 457.080 kHz.

8. The detector (10) according to any one of claims 5 to 7,
**characterized in that**
the processing device (18) is configured to newly set the presettable period duration (PD) and/or the presettable on-duration (ED) and/or the presettable transmission frequency (fₛ) to be used for the transmission signal at least if a burial has been determined.

9. The detector (10) according to claim 8,
**characterized in that**
the orientation determination device (16) is configured to continuously determine the orientation of the detector (10) in the operation of the detector (10), wherein a burial is determined **in that** the continuously determined orientation has not changed over a presettable period of time.

10. The detector (10) according to any one of claims 1 to 3,
**characterized in that**
the second transmitting unit (28) represents a transmitting unit in addition to the first transmitting unit (12), wherein the processing device (18) is configured to generate a transmission signal to be transmitted by the second transmitting unit (28) based on the provided transmission data.

11. The detector (10) according to claim 10,
**characterized in that**
the second transmitting unit (28) is configured to use another radio channel than the first transmitting unit (12).

12. The detector (10) according to any one of the preceding claims,
**characterized in that**
the input device (32) is configured to offer at least two of the following options for the type of mounting of the detector (10):
- mounting of the detector (10) in the backpack;
- mounting of the detector (10) at the hip on the ventral side;
- mounting of the detector (10) at the hip on the left/right side;
- mounting of the detector (10) in the helmet,
wherein the processing device (18) is coupled to the input device (32) and configured to consider the type of mounting in the derivation of the transmission data such that the type of mounting is also transmitted besides the orientation data.

13. A method for operating a detector (10), in particular avalanche transceiver, with at least one first transmitting unit (12) with at least one transmitting antenna (14, 30), which is configured to transmit on-off modulated transmission signals, which include at least one transmission pulse, which has a presettable transmission frequency (fₛ), a presettable period duration (PD) as well as a presettable on-duration (ED), and a second transmitting unit (12; 28), including the following steps (100, 120) of:
a) ascertaining (step 100) the orientation of the detector (10) related to an external reference coordinate system; as well as
b) providing (step 120) the ascertained orientation in the form of orientation data;
c) deriving (step 140) transmission data, by means of which information on the orientation of the detector (10) can be transferred, from the orientation data; and
d) transmitting (step 160) the transmission data by the second transmitting unit (12; 28);
**characterized by** the following further steps of:
- actuating an input device (32) to specify the position of the detector (10) in relation to the head of a user and transferring this parameter by means of the second transmitting unit (12; 28); and/or
- receiving a transmission signal, which involves a coding of the head position of a victim buried alive, by means of at least one receiving unit (34) of the detector (10) with at least one receiving antenna; and
- evaluating the transmission signal by means of a processing device (18) of the detector (10) such that the position of the head of the victim buried alive is displayed on a display device (36) of the detector (10), which is coupled to the processing device (18), as the search location.

## Revendications

1. Détecteur (10), surtout un détecteur de victimes d'avalanches, avec
- au moins une première unité d'émission (12) avec au moins une antenne d'émission (14) qui est conçue pour émettre des signaux d'émission modulés en tout ou rien comportant au moins une impulsion d'émission qui présente une fréquence d'émission (fₛ) qui peut être prédéterminée, une durée de période (PD) qui peut être prédéterminée ainsi qu'un temps de fonctionnement (ED) qui peut être prédéterminé;
- au moins un dispositif de détermination de l'orientation (16) qui est conçu pour déterminer l'orientation du détecteur (10) par rapport à un système de coordonnées de référence externe et fournir en tant que données d'orientation;
- un dispositif de traitement (18) qui est couplé avec le dispositif de détermination de l'orientation (16) et qui est conçu pour traiter les données d'orientation; et
- une seconde unité d'émission (12; 28)
dans lequel le dispositif de traitement (18) est couplé avec la seconde unité d'émission (12; 28);
dans lequel le dispositif de traitement (18) est conçu pour dériver des données d'émission à partir des données d'orientation fournies par le dispositif de détermination de l'orientation (16) au moyen desquelles des informations concernant l'orientation du détecteur (10) sont transférables; dans lequel la seconde unité d'émission (12; 28) est conçue pour émettre les données d'émission fournies par le dispositif de traitement (18), **caractérisé en ce**
**que** le détecteur (10) comporte un dispositif d'entrée (32) qui est conçu pour spécifier la position du détecteur (10) par rapport à la tête d'un utilisateur, dans lequel le détecteur (10) est conçu pour transmettre ce paramètre au moyen de la seconde unité d'émission (12; 28), et/ou en ce que le détecteur (10) comporte en outre:
- au moins une unité de réception (34) avec au moins une antenne de réception pour recevoir un signal d'émission contenant un codage de la position de la tête d'une personne ensevelie; ainsi que
- un dispositif d'affichage (36) qui est couplé avec le dispositif de traitement (18);
dans lequel le dispositif de traitement (18) est conçu pour évaluer le signal d'émission de sorte que la position de la tête de la personne ensevelie est affichée comme lieu de recherche au dispositif d'affichage (36).

2. Détecteur (10) selon la revendication 1,
**caractérisé en ce**
**que** le dispositif de détermination de l'orientation (16) est conçu pour déterminer l'orientation verticale et horizontale du détecteur (10) par rapport au système de coordonnées de référence externe.

3. Détecteur (10) selon la revendication 2,
**caractérisé en ce**
**que** le dispositif de détermination de l'orientation (16) comporte un premier capteur d'accélération (20) pour déterminer un angle de basculement, un second capteur d'accélération (20) pour déterminer un angle de roulis du détecteur (10) ainsi qu'un capteur de champ magnétique terrestre au moins biaxial.

4. Détecteur (10) selon l'une quelconque des revendications précédentes,
**caractérisé en ce**
**que** la seconde unité d'émission (12) est identique à la première unité d'émission (12).

5. Détecteur (10) selon la revendication 4,
**caractérisé en ce**
**que** le dispositif de traitement (18) est conçu pour définir, en fonction des données d'orientation déterminées, la durée de période (PD) qui peut être prédéterminée et/ou le temps de fonctionnement (ED) qui peut être prédéterminé et/ou la fréquence d'émission (fₛ) du signal d'émission qui peut être prédéterminée.

6. Détecteur (10) selon la revendication 5,
**caractérisé en ce**
**que** le dispositif de traitement (18) comporte une mémoire (26), surtout une table de consultation, dans laquelle des valeurs prédéterminées pour la durée de période (PD) et/ou le temps de fonctionnement (ED) et/ou la fréquence d'émission (fₛ) sont attribuées aux valeurs prédéterminées des données d'orientation déterminées, surtout de l'orientation horizontale et verticale.

7. Détecteur (10) selon la revendication 6,
**caractérisé en ce**
**que** la plage de valeurs pour la durée de période (PD) qui peut être prédéterminée est située dans l'intervalle de 700 ms à 1300 ms et/ou la plage de valeurs pour le temps de fonctionnement (ED) qui peut être prédéterminé est située dans l'intervalle de 70 ms à 650 ms et/ou la plage de valeurs pour la fréquence d'émission (fₛ) qui peut être prédéterminée est située dans l'intervalle de 456,920 kHz à 457,080 kHz.

8. Détecteur (10) selon l'une quelconque des revendications 5 à 7,
**caractérisé en ce**
**que** le dispositif de traitement (18) est conçu pour redéfinir la durée de période (PD) qui peut être prédéterminée et/ou le temps de fonctionnement (ED) qui peut être prédéterminé et/ou la fréquence d'émission (fₛ) qui peut être prédéterminée à utiliser pour le signal d'émission en tout cas lorsque un ensevelissement a été constaté.

9. Détecteur (10) selon la revendication 8,
**caractérisé en ce**
**que** le dispositif de détermination de l'orientation (16) est conçu pour déterminer continuellement lors du fonctionnement du détecteur (10) l'orientation du détecteur (10), dans lequel un ensevelissement est constaté par le fait que l'orientation déterminée continuellement n'a pas changé sur une période de temps qui peut être prédéterminée.

10. Détecteur (10) selon l'une quelconque des revendications 1 à 3,
**caractérisé en ce**
**que** la seconde unité d'émission (28) constitue une unité d'émission supplémentaire à la première unité d'émission (12), dans lequel le dispositif de traitement (18) est conçu pour générer un signal à émettre par la seconde unité d'émission (28) sur la base des données d'émission fournies.

11. Détecteur (10) selon la revendication 10,
**caractérisé en ce**
**que** la seconde unité d'émission (28) est conçue pour utiliser un autre canal radio que la première unité d'émission (12).

12. Détecteur (10) selon l'une quelconque des revendications précédentes,
**caractérisé en ce**
**que** le dispositif d'entrée (32) est conçu pour offrir au moins deux des possibilités de choix suivantes pour le type de montage du détecteur (10):
- montage du détecteur (10) dans le sac à dos;
- montage du détecteur (10) à la hanche sur le côté du ventre;
- montage du détecteur (10) à la hanche sur le côté gauche/droit;
- montage du détecteur (10) dans le casque,
dans lequel le dispositif de traitement (18) est couplé avec le dispositif d'entrée (32) et est conçu pour prendre en compte le type de montage lors de la dérivation des données d'émission de sorte qu'en plus des données d'orientation aussi le type de montage est émis.

13. Procédé de fonctionnement d'un détecteur (10), surtout d'un détecteur de victimes d'avalanches, avec au moins une première unité d'émission (12) avec au moins une antenne d'émission (14, 30) qui est conçue pour émettre des signaux d'émission modulés en tout ou rien comportant au moins une impulsion d'émission qui présente une fréquence d'émission (fₛ) qui peut être prédéterminée, une durée de période (PD) qui peut être prédéterminée ainsi qu'un temps de fonctionnement (ED) qui peut être prédéterminé, et une seconde unité d'émission (12; 28) comportant les étapes suivantes (100, 120) :
a) déterminer (étape 100) l'orientation du détecteur (10) par rapport à un système de coordonnées de référence externe; ainsi que
b) fournir (étape 120) l'orientation déterminée sous forme des données d'orientation;
c) dériver (étape 140) des données d'émission à partir des données d'orientation, dans lequel des informations concernant l'orientation du détecteur (10) sont transférables au moyen desdites données d'émission; et
d) émettre (étape 160) des données d'émission par la seconde unité d'émission (12; 28);
**caractérisé par** les étapes ultérieures suivantes:
- activer un dispositif d'entrée (32) pour spécifier la position du détecteur (10) par rapport à la tête d'un utilisateur, et transmettre ce paramètre au moyen de la seconde unité d'émission (12; 28), et/ou
- recevoir un signal d'émission contenant un codage de la position de la tête d'une personne ensevelie au moyen d'au moins une unité de réception (34) du détecteur (10) avec au moins une antenne de réception; et
- évaluer le signal d'émission au moyen d'un dispositif de traitement (18) du détecteur (10) de sorte que sur un dispositif d'affichage (36) du détecteur (10) qui est couplé avec le dispositif de traitement (18) la position de la tête de la personne ensevelie est affichée comme lieu de recherche.
